# EUROPEAN PATENT SPECIFICATION

(11) **EP 4 497 633 B1**
(45) Date of publication and mention of the grant of the patent: **29.04.2026**
(21) Application number: 23774414.9
(22) Date of filing: 01.03.2023
(51) Int. Cl.: B60Q 1/12, F21S 41/148, F21S 41/153, F21S 41/255, F21S 41/32, F21S 41/43, F21S 41/663, F21W 102/13, F21W 102/19

(54) **VEHICULAR LAMP SYSTEM, LIGHT DISTRIBUTION CONTROL DEVICE, AND LIGHT DISTRIBUTION CONTROL METHOD**
FAHRZEUGLAMPENSYSTEM, LICHTVERTEILUNGSSTEUERUNGSVORRICHTUNG UND LICHTVERTEILUNGSSTEUERUNGSVERFAHREN
SYSTÈME DE PHARES DE VÉHICULE, DISPOSITIF DE COMMANDE DE DISTRIBUTION DE LUMIÈRE, ET PROCÉDÉ DE COMMANDE DE DISTRIBUTION DE LUMIÈRE

(30) Priority: 22.03.2022 JP 2022045931
(43) Date of publication of application: 29.01.2025
(73) Proprietor: Koito Manufacturing Co., Ltd., Shinagawa-ku, Tokyo 141-0001 (JP)
(72) Inventor: MURAMATSU, Takao, Shizuoka-shi Shizuoka 424-8764 (JP); MARUYAMA, Yuta, Shizuoka-shi Shizuoka 424-8764 (JP); WATANO, Yuichi, Shizuoka-shi Shizuoka 424-8764 (JP)
(74) Representative: Algemeen Octrooi- en Merkenbureau B.V.
(86) International application number: PCT/JP2023/007651
(87) International publication number: WO 2023/181815

(56) References cited:
- EP-A1- 3 550 204
- EP-B1- 1 875 124
- JP-A- 2000 168 437
- JP-A- 2009 220 650
- JP-A- 2015 230 768
- US-A1- 2015 377 442
- US-A1- 2017 232 882

## Description

### TECHNICAL FIELD

The present invention relates to vehicle lamp systems, light distribution controlling devices, and light distribution controlling methods.

### BACKGROUND ART

Vehicle lamps have been proposed in recent years that use a high-definition light source array in which light sources, such as LEDs, are arrayed in a matrix (see, for example, Patent Literature 1).

### RELATED-ART LITERATURE

### PATENT LITERATURE

Patent Literature 1: JP 2008-094127A describes a headlight, controlled to perform irradiation with a pattern to reduce light quantity in a prescribed region above the detected light spot.
Patent Literature 2: US 2017/232882 A1 describes a vehicular lamp comprising a pair of lamp modules equipped with a first lamp unit and a second lamp unit, and a horizontally long first light distribution pattern and a second light distribution pattern that is smaller and brighter than the first light distribution pattern.
Patent Literature 3: JP 2000 168437 A describes an illumination device with a front illumination light , a driving means and a preceding car detection means as defined by the preamble of claim 1.

### SUMMARY OF INVENTION

### TECHNICAL PROBLEM

Typically, high beam light distribution patterns that vehicle lamps form include a portion called a hot zone that has a high illuminance or luminous intensity. Illuminating with a hot zone the part of the region ahead of the host vehicle where particularly high visibility is required can improve the visibility for the driver. If a vehicle lamp includes a light source array, a hot zone can be formed by creating a luminous intensity gradient among the light sources.

Meanwhile, in one known technique, when the driver's line of sight shifts from the front of the vehicle to the direction of turn, such as when the vehicle makes a turn, the optical axes of the vehicle lamps are swiveled in the direction of turn to increase the visibility of where the vehicle turns to. If a vehicle lamp includes a light source array, a hot zone in a high beam light distribution pattern can be swiveled in the direction of turn to increase the visibility of where the vehicle turns to, as with the case of swiveling the optical axes.

There exists a demand for expanding the range in which a hot zone can be swiveled to improve the visibility for drivers. However, high-definition light source arrays are generally expensive. Moreover, light source arrays do not dissipate heat easily as they have a structure in which a large number of light sources are densely arrayed. Due to these factors, it is desirable not to increase the size of a light source array.

The present invention has been made in view of such circumstances and is directed, in one aspect, to providing a technology for improving the visibility for a driver while avoiding an increase in the size of a light source array.

### SOLUTION TO PROBLEM

One aspect of the present invention provides a vehicle lamp system as defined in claim 6. This vehicle lamp system includes a first light distribution variable lamp that forms, in a region ahead of a vehicle, a first light distribution pattern having a first hot zone; a second light distribution variable lamp that forms a second light distribution pattern outside the first light distribution pattern in a width direction of the vehicle; and a light distribution controlling device that controls formation of light distribution patterns by the first light distribution variable lamp and the second light distribution variable lamp. The light distribution controlling device controls the first light distribution variable lamp and the second light distribution variable lamp so as to swivel the first hot zone within the first light distribution pattern and to form the second light distribution pattern outside the first light distribution pattern where the first hot zone swivels to.

Another aspect of the present invention provides a light distribution controlling device as defined in claim 1. The light distribution controlling device controls the formation of light distribution patterns by a first light distribution variable lamp and a second light distribution variable lamp, the first light distribution variable lamp forming, in a region ahead of a vehicle, a first light distribution pattern having a first hot zone, the second light distribution variable lamp forming a second light distribution pattern outside the first light distribution pattern in a width direction of the vehicle. This light distribution controlling device controls the first light distribution variable lamp and the second light distribution variable lamp so as to swivel the first hot zone within the first light distribution pattern and to form the second light distribution pattern outside the first light distribution pattern where the first hot zone swivels to.

Another aspect of the present invention provides a light distribution controlling method according to the claim 7 capable of controlling formation of light distribution patterns by a first light distribution variable lamp and a second light distribution variable lamp, the first light distribution variable lamp forming, in a region ahead of a vehicle, a first light distribution pattern having a first hot zone, the second light distribution variable lamp forming a second light distribution pattern outside the first light distribution pattern in a width direction of the vehicle. This light distribution controlling method includes controlling the first light distribution variable lamp and the second light distribution variable lamp so as to swivel the first hot zone within the first light distribution pattern and to form the second light distribution pattern outside the first light distribution pattern where the first hot zone swivels to.

### ADVANTAGEOUS EFFECTS OF INVENTION

The present invention can improve the visibility for a driver while avoiding an increase in the size of a light source array.

### BRIEF DESCRIPTION OF DRAWINGS

[Fig. 1] Fig. 1 shows a schematic configuration of a vehicle lamp system according to Embodiment 1.
[Fig. 2] Fig. 2 is a schematic diagram showing light distribution patterns that the lamps form.
[Fig. 3] Figs. 3A to 3C are schematic diagrams showing one example of light distribution control according to Embodiment 1.
[Fig. 4] Figs. 4A to 4C are schematic diagrams showing one example of light distribution control according to Embodiment 2.
[Fig. 5] Figs. 5A to 5C are schematic diagrams showing one example of light distribution control according to Embodiment 3.
[Fig. 6] Figs. 6A to 6C are schematic diagrams showing one example of light distribution control according to Embodiment 4.
[Fig. 7] Figs. 7A to 7C are schematic diagrams showing one example of light distribution control according to Embodiment 5, which does not form part of the present invention.

### DESCRIPTION OF EMBODIMENTS

Hereinafter, the present invention will be described based on exemplary embodiments and with reference to the drawings. The embodiments are illustrative in nature and are not intended to limit the invention. Not all the features and combinations thereof described in the embodiments are necessarily essential to the invention. Identical or equivalent constituent elements, members, and processes shown in the drawings are given identical reference characters, and their duplicate description will be omitted, as appropriate. The scales and shapes of the components shown in the drawings are set merely for convenience in order to facilitate the description and are not to be interpreted as limiting, unless specifically indicated otherwise. When terms such as "first" and "second" are used in the present specification or in the claims, these terms do not indicate the order or the level of importance in any way and are merely used to distinguish a given component from another component, unless specifically indicated otherwise. Part of members that is not important in describing the embodiments is omitted from the drawings.

### (Embodiment 1)

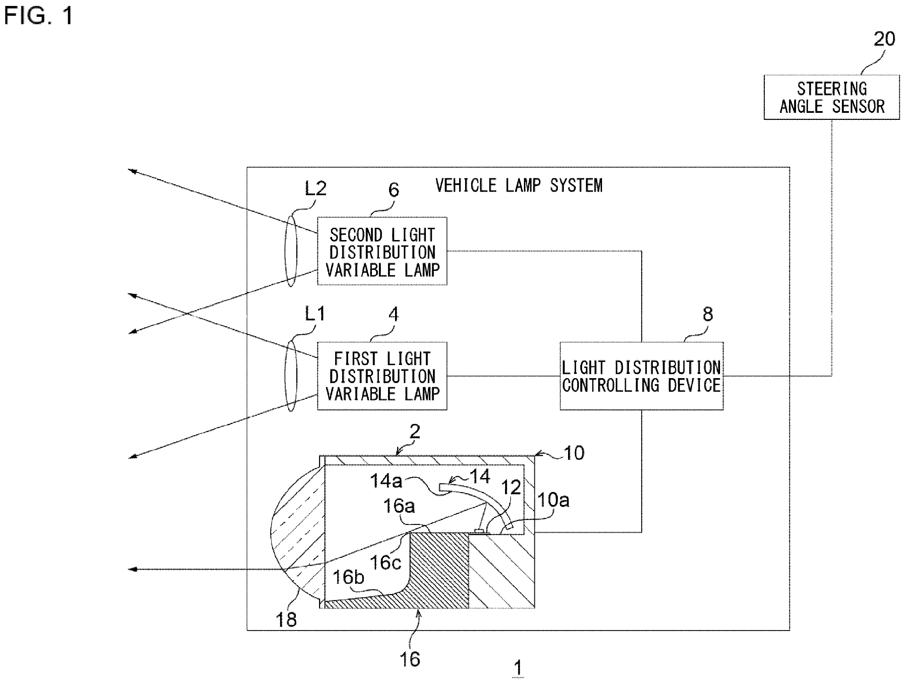

Fig. 1 shows a schematic configuration of a vehicle lamp system 1 according to Embodiment 1. Fig. 1 depicts some of the constituent elements of the vehicle lamp system 1 in the form of functional blocks. These functional blocks are implemented, in terms of their hardware configuration, by an element and/or circuit, including a CPU and a memory of a computer, or implemented, in terms of their software configuration, by a computer program or the like. It is to be appreciated by a person skilled in the art that these functional blocks can be implemented in a variety of forms through combinations of hardware and software.

The vehicle lamp system 1 includes a low beam lamp 2, a first light distribution variable lamp 4, a second light distribution variable lamp 6, and a light distribution controlling device 8. These members may be contained within a single housing, or one or more of these members may be provided outside such a housing. For example, the low beam lamp 2, the first light distribution variable lamp 4, the second light distribution variable lamp 6, and the light distribution controlling device 8 are housed in a lamp room. The lamp room is defined by a lamp body having an opening that opens to the front of the vehicle and a light-transmissive cover attached so as to cover the opening of the lamp body. The light distribution controlling device 8 may be provided outside the lamp room, such as in the vehicle. In this case, the light distribution controlling device 8 may be entirely or partly constituted by a vehicle ECU. Meanwhile, the low beam lamp 2, the first light distribution variable lamp 4, and the second light distribution variable lamp 6 may be entirely or partly housed in separate housings.

The low beam lamp 2 in one example includes a light source mounting portion 10, a light source 12, a reflector 14, a shade member 16, and a projection lens 18. The light source mounting portion 10 is formed, for example, of a metal material, such as aluminum, and is supported on the lamp body via a bracket (not shown). The light source mounting portion 10 has a light source mounting surface 10a. The light source mounting surface 10a according to the present embodiment extends in a substantially horizontal direction. The light source 12 is mounted on the light source mounting surface 10a.

The light source 12 is, for example, a light-emitting diode (LED). Herein, the light source 12 may instead, for example, be a semiconductor light source other than an LED, such as a laser diode (LD) or an organic or inorganic electroluminescence (EL) light source, an incandescent lamp, a halogen lamp, or a discharge lamp. The light source 12 emits light toward the reflector 14. The reflector 14 has a substantially dome-like shape. The reflector 14 is disposed so as to cover the light source 12 from directly above in the vertical direction and is fixed to the light source mounting portion 10. The reflector 14 has a reflective surface 14a formed by a part of a spheroidal surface. The reflective surface 14a has a first focal point and a second focal point that is located further to the front of the lamp than the first focal point. The positional relationship of the reflector 14 and the light source 12 is set such that the light source 12 substantially coincides with the first focal point of the reflective surface 14a.

The shade member 16 is fixed to the side of the light source mounting portion 10 that faces the front of the lamp. The shade member 16 includes a flat portion 16a extending substantially horizontally and a curved portion 16b located further to the front of the lamp than the flat portion 16a. The curved portion 16b is curved downward so as not to block the light source light from entering the projection lens 18. The positional relationship of the reflector 14 and the shade member 16 is set such that a ridge 16c formed by the flat portion 16a and the curved portion 16b is located near the second focal point of the reflective surface 14a. The projection lens 18 is fixed to the leading end of the curved portion 16b. The projection lens 18 is formed, for example, by a plano-convex aspherical lens and projects an inverted image of a light source image formed in its posterior focal plane onto an imaginary vertical screen ahead of the lamp. The projection lens 18 is disposed in the optical axis of the low beam lamp 2 such that the posterior focal point of the projection lens 18 substantially coincides with the second focal point of the reflective surface 14a.

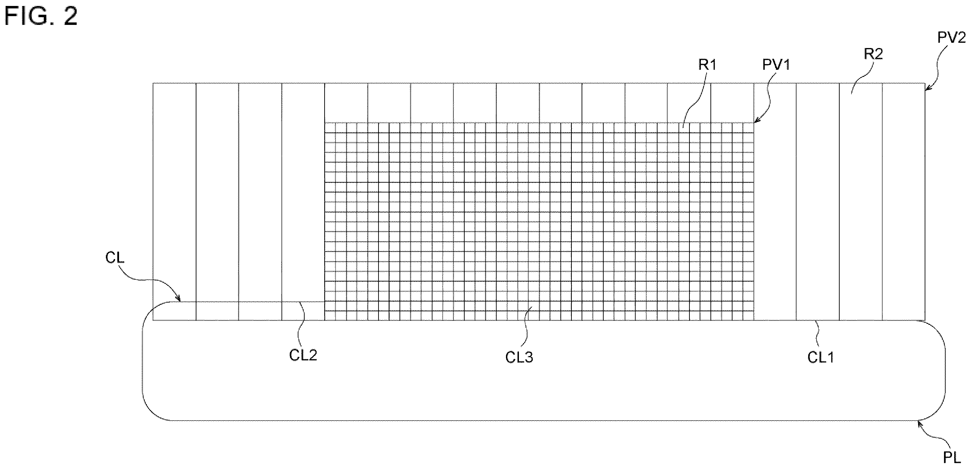

Light emitted from the light source 12 is reflected by the reflective surface 14a, travels through the vicinity of the ridge 16c, and enters the projection lens 18. The light that has entered the projection lens 18 is projected into the region ahead of the lamp as substantially parallel light. At this point, the shade member 16 blocks part of the light source light from traveling ahead of the lamp. Specifically, part of the light emitted from the light source 12 is reflected by the flat portion 16a. In other words, the light from the light source 12 is selectively cut off at the ridge 16c serving as a boundary. Thus, a low beam light distribution pattern including a cutoff line corresponding to the shape of the ridge 16c (see Fig. 2) is formed in the region ahead of the vehicle. The low beam lamp 2 receives a signal instructing it to form a low beam light distribution pattern from the light distribution controlling device 8 and forms a low beam light distribution pattern in the region ahead of the host vehicle.

It is to be noted that the structure of the low beam lamp 2 is not limited to the one described above, and any known structures can be adopted. For example, the shade member 16 that forms a cutoff line may be of a shutter type in which a shade plate moves back and forth with respect to the optical axis. The low beam lamp 2 does not have to include the reflector 14 or the projection lens 18.

The first light distribution variable lamp 4 is capable of illuminating the region ahead of the vehicle with a visible light beam L1 of a variable intensity distribution. The first light distribution variable lamp 4 is supported on the lamp body by a known coupling mechanism (not shown). The first light distribution variable lamp 4 is capable of varying, independently of each other, the illuminance of light illuminating a plurality of individual regions arrayed in the region ahead. The first light distribution variable lamp 4 receives information instructing on a first light distribution pattern from the light distribution controlling device 8 and emits a visible light beam L1 having an intensity distribution corresponding to the first light distribution pattern. Thus, the first light distribution pattern is formed ahead of the host vehicle.

The first light distribution variable lamp 4 according to the present embodiment includes a light source array. The light source array includes a plurality of light sources arrayed in a matrix and a circuit board capable of adjusting the light of the light sources independently of each other. Preferred examples of such a light source include a semiconductor light-emitting element, such as an LED, an LD, or an organic or inorganic EL light source. The number of the light sources, that is, the resolving power (resolution) of the first light distribution variable lamp 4 is higher than the number of the light sources of the second light distribution variable lamp 6, that is, higher than the resolving power of the second light distribution variable lamp 6 and is, for example, from 1,000 pixels to 1,300,000 pixels. The resolution of a light distribution variable lamp means the number of the unit regions, of a light distribution pattern, whose illuminance can be varied independently of each other.

The second light distribution variable lamp 6 is capable of illuminating the region ahead of the vehicle with a visible light beam L2 of a variable intensity distribution. The second light distribution variable lamp 6 is supported on the lamp body by a known coupling mechanism (not shown). The second light distribution variable lamp 6 is capable of varying, independently of each other, the illuminance of light illuminating a plurality of individual regions arrayed in the region ahead. The second light distribution variable lamp 6 receives information instructing on a second light distribution pattern from the light distribution controlling device 8 and emits a visible light beam L2 having an intensity distribution corresponding to the second light distribution pattern. Thus, the second light distribution pattern is formed ahead of the host vehicle.

The second light distribution variable lamp 6 according to the present embodiment includes a light source unit constituted by a plurality of light sources arrayed in the horizontal direction and a circuit board capable of adjusting the light of the light sources independently of each other. Preferred examples of such a light source include a semiconductor light-emitting element, such as an LED, an LD, or an organic or inorganic EL light source. The resolving power (resolution) of the second light distribution variable lamp 6 is lower than the resolving power of the first light distribution variable lamp 4 and is, for example, from 10 pixels to 50 pixels.

It is to be noted that the structures of the first light distribution variable lamp 4 and the second light distribution variable lamp 6 are not limited to those described above, and any known structures can be adopted. For example, in order to form an illuminance distribution corresponding to a light distribution pattern, each light distribution variable lamp may include a pattern forming device of a matrix type, such as a digital mirror device (DMD) or a liquid-crystal device.

The light distribution controlling device 8 controls formation of light distribution patterns by the low beam lamp 2, the first light distribution variable lamp 4, and the second light distribution variable lamp 6. The light distribution controlling device 8 can be constituted by a digital processor and may, for example, be constituted by a combination of a microcomputer including a CPU and a software program or by a field-programmable gate array (FPGA), an application specific IC (ASIC), or the like. The light distribution control device 8 operates as the integrated circuit constituting itself executes a program stored in a memory.

Now, shapes of light distribution patterns that the lamps form and control of forming the light distribution patterns performed by the light distribution controlling device 8 will be described. Fig. 2 is a schematic diagram showing light distribution patterns that the lamps form. Fig. 2 shows the maximum range in which the lamps can form light distribution patterns. A light distribution pattern is understood as a two-dimensional illuminance distribution of an illumination pattern that a lamp forms on an imaginary vertical screen ahead of the host vehicle. Note that Fig. 2 shows light distribution patterns for left-hand traffic.

The low beam lamp 2 can form a low beam light distribution pattern PL. The low beam light distribution pattern PL has a cutoff line CL at its upper end. The cutoff line CL includes a first partial cutoff line CL1, a second partial cutoff line CL2, and a third partial cutoff line CL3. The first partial cutoff line CL1 extends in the horizontal direction in the oncoming lane. The second partial cutoff line CL2 extends in the horizontal direction in the host vehicle's lane and at a position higher than the position of the first partial cutoff line CL1. The third partial cutoff line CL3 extends diagonally between the first partial cutoff line CL1 and the second partial cutoff line CL2 so as to connect the first partial cutoff line CL1 and the second partial cutoff line CL2.

The first light distribution variable lamp 4 can form a first light distribution pattern PV1 of a variable intensity distribution. Fig. 2 shows a first light distribution pattern PV1 formed when the first light distribution variable lamp 4 has turned on all the light sources in its light source array. The first light distribution pattern PV1 is a pattern that overlaps a region above the cutoff line CL and is formed, for example, in a region in which any known high beam light distribution patterns are to be formed. The first light distribution pattern PV1 has a structure in which a set of a plurality of first partial regions R1 are arrayed in a matrix. In one example, the light sources of the first light distribution variable lamp 4 are mapped one-to-one to the first partial regions R1. The illuminance of the first partial regions R1 can be adjusted independently of each other by adjusting the lighting state of the light sources.

The second light distribution variable lamp 6 can form a second light distribution pattern PV2 of a variable intensity distribution. Fig. 2 shows a second light distribution pattern PV2 formed when the second light distribution variable lamp 6 has turned on all the light sources in its light source unit. The second light distribution pattern PV2 is a pattern that overlaps a region above the cutoff line CL and is formed, for example, in a region that encompasses the first light distribution pattern PV1. The second light distribution pattern PV2 has a structure in which a set of a plurality of second partial regions R2 are arrayed in the width direction of the vehicle (in the horizontal direction). The second partial regions R2 each have, for example, a rectangular shape elongated in the vertical direction and are longer than the first light distribution pattern PV1 in the vertical direction. In one example, the light sources of the second light distribution variable lamp 6 are mapped one-to-one to the second partial regions R2. The illuminance of the second partial regions R2 can be adjusted independently of each other by adjusting the lighting state of the light sources.

The second light distribution pattern PV2 is projected so as to extend outside the first light distribution pattern PV1 in the width direction of the vehicle. Therefore, some of the second partial regions R2 overlap the first light distribution pattern PV1 in a center portion in the width direction of the vehicle, and the other second partial regions R2 lie outside the first light distribution pattern PV1 at the two ends in the width direction of the vehicle. Note that the shapes and the arrangement of the first partial regions R1 and the second partial regions R2 can be changed as appropriate along with, for example, the arrangement of the light sources in the first light distribution variable lamp 4 and the second light distribution variable lamp 6.

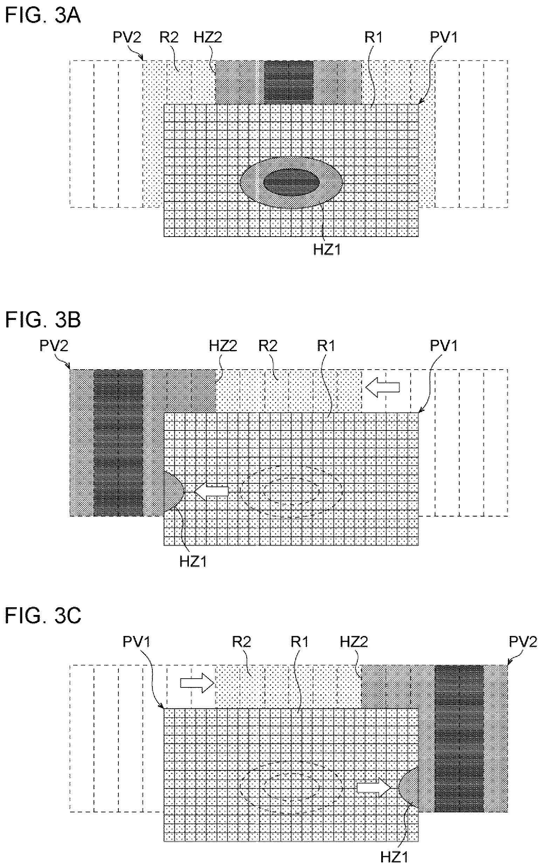

The light distribution controlling device 8 executes light distribution control as described below. Figs. 3A to 3C are schematic diagrams showing one example of light distribution control according to Embodiment 1. Fig. 3A shows light distribution patterns formed when the steering angle is 0°. Fig. 3B shows light distribution patterns formed when the steering is turned to the left. Fig. 3C shows light distribution patterns formed when the steering is turned to the right. Figs. 3A to 3C omit depicting a low beam light distribution pattern PL.

As shown in Fig. 3A, the light distribution controlling device 8 controls the first light distribution variable lamp 4 so as to form a first light distribution pattern PV1 having a first hot zone HZ1. The first hot zone HZ1 is a region having an illuminance (luminous intensity) higher than that of the remaining region in the first light distribution pattern PV1. The first hot zone HZ1 is formed in the part of the region ahead of the host vehicle where particularly high visibility is required. In one example, the light distribution controlling device 8 controls the first light distribution variable lamp 4 so as to form a first hot zone HZ1 above a cutoff line CL. When the steering angle is 0°, the first hot zone HZ1 is disposed at substantially the center in the width direction of the vehicle. The dimension of the first hot zone HZ1 in the vertical direction is, for example, no more than a half the dimension of the first light distribution pattern PV1 in the vertical direction, and the dimension of the first hot zone HZ1 in the horizontal direction is, for example, no more than a half the dimension of the first light distribution pattern PV1 in the horizontal direction.

Although Fig. 3A shows a first hot zone HZ1 of an elliptical shape, the shape of a first hot zone HZ1 is not limited to the one shown. Furthermore, although Fig. 3A shows a first hot zone HZ1 having such an illuminance gradient where the illuminance decreases gradually from the center toward the outer side, a first hot zone HZ1 does not have to have such an illuminance gradient.

The light distribution controlling device 8 controls the second light distribution variable lamp 6 so as to form a second light distribution pattern PV2 in which the second partial regions R2 that are located at the outer sides in the width direction of the vehicle and that do not overlap the first light distribution pattern PV1 have an illuminance of zero and in which the second partial regions R2 that overlap the first light distribution pattern PV1 have an illuminance of higher than zero. When the second light distribution pattern PV2 is constituted only by some of the second partial regions R2 and the second partial regions R2 that do not constitute the second light distribution pattern PV2, that is, the second partial regions R2 that have an illuminance of zero are moved in the width direction of the vehicle as described above, the second light distribution pattern PV2 can be swiveled in the range between the outer left side and the outer right side of the first light distribution pattern PV1.

The light distribution controlling device 8 controls the second light distribution variable lamp 6 so as to form a second hot zone HZ2 within the second light distribution pattern PV2. In one example, the light distribution controlling device 8 controls the second light distribution variable lamp 6 so as to form a second hot zone HZ2 above a cutoff line CL. The light distribution controlling device 8 controls the second light distribution variable lamp 6 so as to form the second hot zone HZ2 at a position where the second hot zone HZ2 overlaps the first hot zone HZ1 in the width direction of the vehicle. As mentioned above, the second partial regions R2 are longer than the first light distribution pattern PV1 in the vertical direction. Therefore, the second hot zone HZ2 is longer than the first hot zone HZ1 in the vertical direction.

The light distribution controlling device 8 then controls the first light distribution variable lamp 4 so as to swivel the first hot zone HZ1 within the first light distribution pattern PV1 (i.e., so as to displace the first hot zone HZ1 in the width direction of the vehicle), as shown in Figs. 3B and 3C. For example, the light distribution controlling device 8 acquires a signal from a steering angle sensor 20 (steering sensor) provided in the vehicle (see Fig. 1). The light distribution controlling device 8 then swivels the first hot zone HZ1 in accordance with the output value of the steering angle sensor 20. This swiveling can displace the first hot zone HZ1 in the direction of turn of the vehicle and thus improve the visibility of where the vehicle turns to. Furthermore, swiveling the first hot zone HZ1 renders unnecessary a mechanism for swiveling the first light distribution variable lamp 4.

The light distribution controlling device 8 controls the second light distribution variable lamp 6 so as to swivel the second light distribution pattern PV2 in tandem with the swiveling of the first hot zone HZ1. Then, with the first hot zone HZ1 having reached an end of the first light distribution pattern PV1, the light distribution controlling device 8 controls the second light distribution variable lamp 6 so as to form the second light distribution pattern PV2 outside the first light distribution pattern PV1 where the first hot zone HZ1 has swiveled to. This configuration makes it possible to illuminate with light a broader range in the direction of turn of the vehicle and can improve the visibility for the driver. To "form a second light distribution pattern PV2 outside a first light distribution pattern PV1" means that at least a part of the second light distribution pattern PV2 is located outside the first light distribution pattern PV1. Therefore, the above expression encompasses a state in which a part of the second light distribution pattern PV2 overlaps the first light distribution pattern PV1 as shown in Fig. 3B or 3C.

The light distribution controlling device 8 controls the second light distribution variable lamp 6 so as to swivel the second hot zone HZ2 with it overlapping the first hot zone HZ1 within the range of the first light distribution pattern PV1. The light distribution controlling device 8 further controls the second light distribution variable lamp 6 so as to displace the second hot zone HZ2 further outward after the first hot zone HZ1 has reached an end of the first light distribution pattern PV1. For example, the light distribution controlling device 8 displaces the second hot zone HZ2 outside the end of the first light distribution pattern PV1 when a first hot zone HZ1 has reached the end of the first light distribution pattern PV1 and the steering angle has increased further. This configuration can further improve the visibility of where the vehicle turns to.

The light distribution controlling device 8 controls the first light distribution variable lamp 4 so as to turn off the first hot zone HZ1 that has reached an end of the first light distribution pattern PV1. In one example, the light distribution controlling device 8 turns off the first hot zone HZ1 that has reached an end of the first light distribution pattern PV1, in accordance with the steering angle. For example, the light distribution controlling device 8 gradually turns off the first hot zone HZ1 when the steering angle further increases after the first hot zone HZ1 has reached an end of the first light distribution pattern PV1, that is, when the second hot zone HZ2 moves to the outer side in the width direction of the vehicle from the end of the first light distribution pattern PV1. In the example shown in Figs. 3B and 3C, the illuminance of the first hot zone HZ1 decreases from the center side in the width direction of the vehicle, and the first hot zone HZ1 is turned off gradually from the center side in the width direction of the vehicle.

This configuration can make a hot zone look as if it moves out of the region in which the first light distribution pattern PV1 is formed (into the region in which the second light distribution pattern PV2 is formed) in a combined light distribution pattern of the first light distribution pattern PV1 and the second light distribution pattern PV2 combined. This configuration makes it possible to guide the driver's line of sight to where the vehicle turns to. Herein, a first hot zone HZ1 may be turned off gradually as the illuminance across the entire first hot zone HZ1 is reduced uniformly.

As described above, the light distribution controlling device 8 according to the present embodiment controls the first light distribution variable lamp 4 and the second light distribution variable lamp 6 so as to swivel the first hot zone HZ1 within the first light distribution pattern PV1 and to form the second light distribution pattern PV2 outside the first light distribution pattern PV1 where the first hot zone HZ1 swivels to. In other words, one of the light distribution variable lamps swivels a hot zone, and the other light distribution variable lamp illuminates with light the region outside the range in which the hot zone is swiveled.

A combination of these two light distribution variable lamps in this manner allows for a lamp design of equipping one of the light distribution variable lamp with a high-definition light source array and equipping the other light distribution variable lamp with a low-definition light source unit. This design can improve the visibility for the driver while avoiding an increase in the size of the light source array.

The light distribution controlling device 8 controls the second light distribution variable lamp 6 so as to swivel the second light distribution pattern PV2 in tandem with the swiveling of the first hot zone HZ1. The light distribution controlling device 8 controls the second light distribution variable lamp 6 so as to swivel the second hot zone HZ2 with it overlapping the first hot zone HZ1 within the range of the first light distribution pattern PV1 and to displace the second hot zone HZ2 further outward after the first hot zone HZ1 has reached an end of the first light distribution pattern PV1. The light distribution controlling device 8 controls the first light distribution variable lamp 4 so as to turn off the first hot zone HZ1 that has reached the end of the first light distribution pattern PV1. The control above can further improve the visibility for the driver. In addition, the control above can guide the driver's line of sight to the region where he or she needs to pay attention to.

### (Embodiment 2)

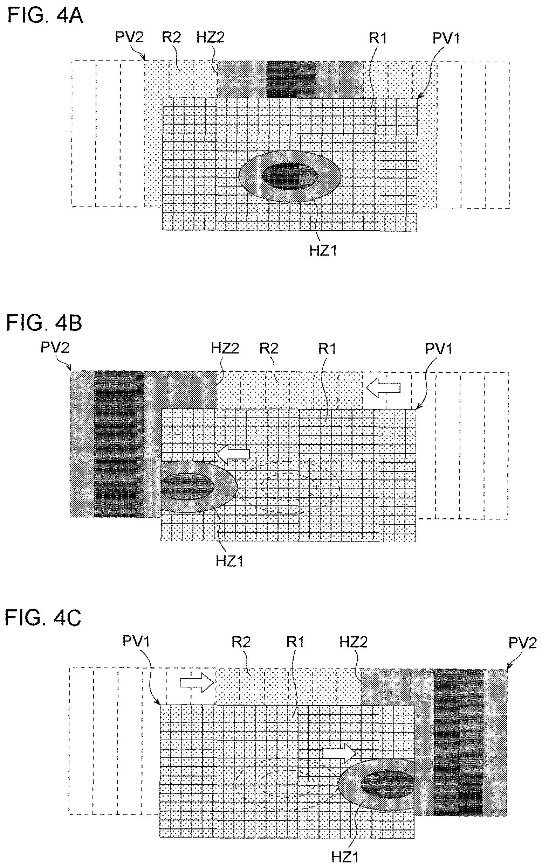

Embodiment 2 has a configuration identical to the configuration of Embodiment 1 except for the content of control by the light distribution control device 8. The present embodiment will be described below with the description centered on its configuration that differs from the configuration of Embodiment 1, and description of the configurations that are common to both embodiments will be simplified or omitted. Figs. 4A to 4C are schematic diagrams showing one example of light distribution control according to Embodiment 2. Fig. 4A shows light distribution patterns formed when the steering angle is 0°. Fig. 4B shows light distribution patterns formed when the steering is turned to the left. Fig. 4C shows light distribution patterns formed when the steering is turned to the right. Figs. 4A to 4C omit depicting a low beam light distribution pattern PL.

As shown in Fig. 4A, the light distribution controlling device 8 controls the first light distribution variable lamp 4 so as to form a first light distribution pattern PV1 having a first hot zone HZ1. The light distribution controlling device 8 controls the second light distribution variable lamp 6 so as to form a second light distribution pattern PV2 with only some of the second partial regions R2. This configuration makes it possible to displace the second light distribution pattern PV2 in the range between the outer left side and the outer right side of the first light distribution pattern PV1. The light distribution controlling device 8 controls the second light distribution variable lamp 6 so as to form a second hot zone HZ2 within the second light distribution pattern PV2. The second hot zone HZ2 is formed at a position where the second hot zone HZ2 overlaps the first hot zone HZ1 in the width direction of the vehicle.

The light distribution controlling device 8 then controls the first light distribution variable lamp 4 so as to swivel the first hot zone HZ1 within the first light distribution pattern PV1, as shown in Figs. 4B and 4C. The light distribution controlling device 8 controls the second light distribution variable lamp 6 so as to swivel the second light distribution pattern PV2 in tandem with the swiveling of the first hot zone HZ1. Then, with the first hot zone HZ1 having reached an end of the first light distribution pattern PV1, the light distribution controlling device 8 controls the second light distribution variable lamp 6 so as to form the second light distribution pattern PV2 outside the first light distribution pattern PV1 where the first hot zone HZ1 has swiveled to.

The light distribution controlling device 8 controls the second light distribution variable lamp 6 so as to swivel the second hot zone HZ2 with it overlapping the first hot zone HZ1 within the range of the first light distribution pattern PV1. The light distribution controlling device 8 further controls the second light distribution variable lamp 6 so as to displace the second hot zone HZ2 further outward after the first hot zone HZ1 has reached the end of the first light distribution pattern PV1.

The light distribution controlling device 8 according to the present embodiment controls the first light distribution variable lamp 4 so as to maintain the first hot zone HZ1 that has reached the end of the first light distribution pattern PV1. As the first hot zone HZ1 remains being formed even after the second hot zone HZ2 has moved outside the first light distribution pattern PV1, a broader region ahead of the host vehicle can be illuminated brightly through a combination of the first hot zone HZ1 and the second hot zone HZ2. This configuration can provide the driver with a sense of comfort. When there is a large difference between the maximum illuminance of the first light distribution variable lamp 4 and the maximum illuminance of the second light distribution variable lamp 6, turning off the first hot zone HZ1 may cause the driver of the host vehicle to feel visually disturbed. Therefore, maintaining the first hot zone HZ1 can keep the driver from feeling visually disturbed.

### (Embodiment 3)

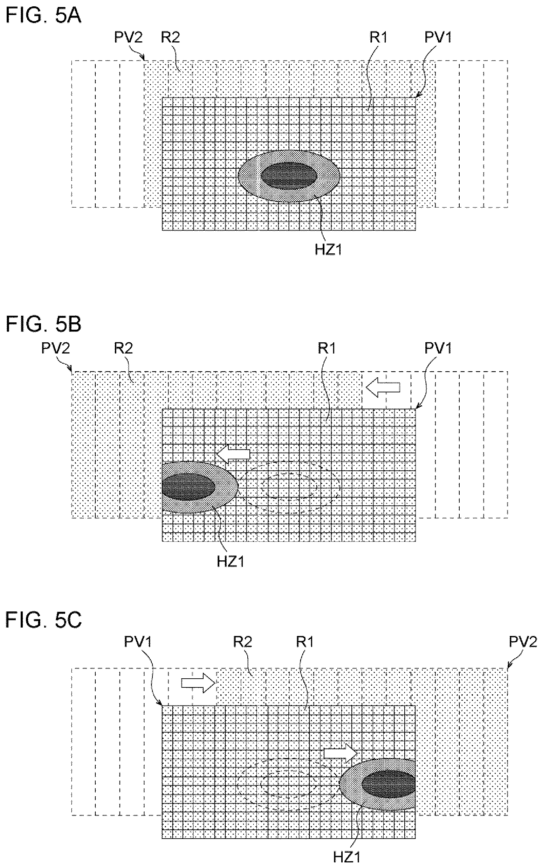

Embodiment 3 has a configuration identical to the configuration of Embodiment 1 except for the content of control by the light distribution control device 8. The present embodiment will be described below with the description centered on its configuration that differs from the configuration of Embodiment 1, and description of the configurations that are common to both embodiments will be simplified or omitted. Figs. 5A to 5C are schematic diagrams showing one example of light distribution control according to Embodiment 3. Fig. 5A shows light distribution patterns formed when the steering angle is 0°. Fig. 5B shows light distribution patterns formed when the steering is turned to the left. Fig. 5C shows light distribution patterns formed when the steering is turned to the right. Figs. 5A to 5C omit depicting a low beam light distribution pattern PL.

As shown in Fig. 5A, the light distribution controlling device 8 controls the first light distribution variable lamp 4 so as to form a first light distribution pattern PV1 having a first hot zone HZ1. The light distribution controlling device 8 controls the second light distribution variable lamp 6 so as to form a second light distribution pattern PV2 with only some of the second partial regions R2. This configuration makes it possible to displace the second light distribution pattern PV2 in the range between the outer left side and the outer right side of the first light distribution pattern PV1. The second light distribution pattern PV2 according to the present embodiment does not include a second hot zone HZ2 and has an illuminance uniform across the entire second light distribution pattern PV2.

The light distribution controlling device 8 then controls the first light distribution variable lamp 4 so as to swivel the first hot zone HZ1 within the first light distribution pattern PV1, as shown in Figs. 5B and 5C. The light distribution controlling device 8 controls the second light distribution variable lamp 6 so as to swivel the second light distribution pattern PV2 in tandem with the swiveling of the first hot zone HZ1. Then, with the first hot zone HZ1 having reached an end of the first light distribution pattern PV1, the light distribution controlling device 8 controls the second light distribution variable lamp 6 so as to form the second light distribution pattern PV2 outside the first light distribution pattern PV1 where the first hot zone HZ1 has swiveled to. The light distribution controlling device 8 according to the present embodiment controls the first light distribution variable lamp 4 so as to maintain the first hot zone HZ1 that has reached the end of the first light distribution pattern PV1.

### (Embodiment 4)

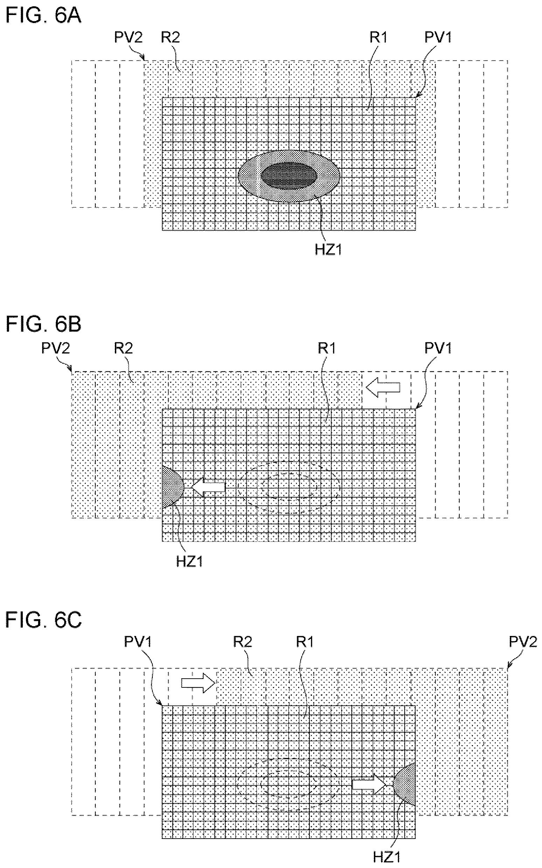

Embodiment 4 has a configuration identical to the configuration of Embodiment 1 except for the content of control by the light distribution control device 8. The present embodiment will be described below with the description centered on its configuration that differs from the configuration of Embodiment 1, and description of the configurations that are common to both embodiments will be simplified or omitted. Figs. 6A to 6C are schematic diagrams showing one example of light distribution control according to Embodiment 4. Fig. 6A shows light distribution patterns formed when the steering angle is 0°. Fig. 6B shows light distribution patterns formed when the steering is turned to the left. Fig. 6C shows light distribution patterns formed when the steering is turned to the right. Figs. 6A to 6C omit depicting a low beam light distribution pattern PL.

As shown in Fig. 6A, the light distribution controlling device 8 controls the first light distribution variable lamp 4 so as to form a first light distribution pattern PV1 having a first hot zone HZ1. The light distribution controlling device 8 controls the second light distribution variable lamp 6 so as to form a second light distribution pattern PV2 with only some of the second partial regions R2. This configuration makes it possible to displace the second light distribution pattern PV2 in the range between the outer left side and the outer right side of the first light distribution pattern PV1. The second light distribution pattern PV2 according to the present embodiment does not include a second hot zone HZ2 and has an illuminance uniform across the entire second light distribution pattern PV2.

The light distribution controlling device 8 then controls the first light distribution variable lamp 4 so as to swivel the first hot zone HZ1 within the first light distribution pattern PV1, as shown in Figs. 6B and 6C. The light distribution controlling device 8 controls the second light distribution variable lamp 6 so as to swivel the second light distribution pattern PV2 in tandem with the swiveling of the first hot zone HZ1. Then, with the first hot zone HZ1 having reached an end of the first light distribution pattern PV1, the light distribution controlling device 8 controls the second light distribution variable lamp 6 so as to form the second light distribution pattern PV2 outside the first light distribution pattern PV1 where the first hot zone HZ1 has swiveled to.

The light distribution controlling device 8 according to the present embodiment controls the first light distribution variable lamp 4 so as to gradually turn off the first hot zone HZ1 when the steering angle further increases after the first hot zone HZ1 has reached the end of the first light distribution pattern PV1. In the example shown in Figs. 6B and 6C, the first hot zone HZ1 that has reached the end of the first light distribution pattern PV1 is turned off gradually from the center side in the width direction of the vehicle. Herein, the first hot zone HZ1 may be turned off gradually as the illuminance across the entire first hot zone HZ1 is reduced uniformly.

### (Embodiment 5)

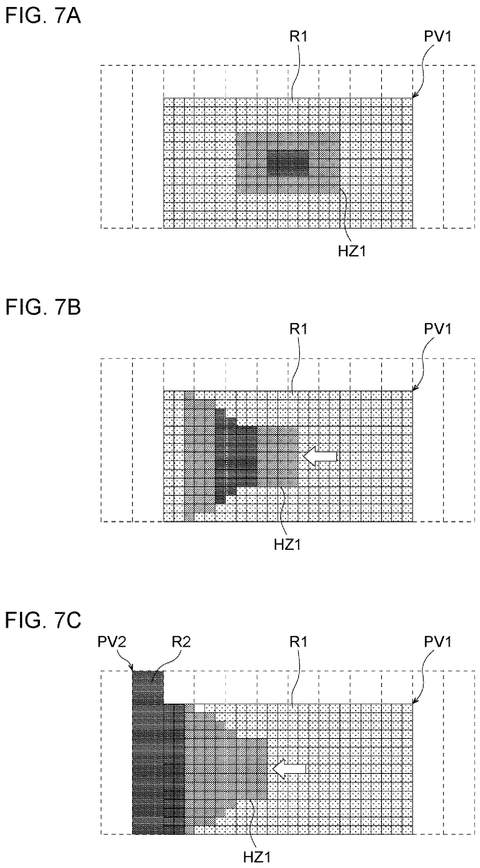

Embodiment 5 , which does not form part of the present invention, has a configuration identical to the configuration of Embodiment 1 except for the content of control by the light distribution control device 8. The present embodiment will be described below with the description centered on its configuration that differs from the configuration of Embodiment 1, and description of the configurations that are common to both embodiments will be simplified or omitted. Figs. 7A to 7C are schematic diagrams showing one example of light distribution control according to Embodiment 5. Fig. 7A shows light distribution patterns formed when the steering angle is 0°. Fig. 7B shows light distribution patterns formed when the steering is turned to the left by a first angle. Fig. 7C shows light distribution patterns formed when the steering is turned to the left by a second angle greater than the first angle. Figs. 7A to 7C omit depicting a low beam light distribution pattern PL.

As shown in Fig. 7A, the light distribution controlling device 8 controls the first light distribution variable lamp 4 so as to form a first light distribution pattern PV1 having a first hot zone HZ1. The light distribution controlling device 8 according to the present embodiment refrains from forming a second light distribution pattern PV2 until the first hot zone HZ1 reaches an end of the first light distribution pattern PV1.

The light distribution controlling device 8 controls the first light distribution variable lamp 4 so as to swivel the first hot zone HZ1 within the first light distribution pattern PV1 in accordance with the steering, as shown in Fig. 7B. Then, as shown in Fig. 7C, with the first hot zone HZ1 having reached the end of the first light distribution pattern PV1, the light distribution controlling device 8 controls the second light distribution variable lamp 6 so as to form a second light distribution pattern PV2 outside the first light distribution pattern PV1 where the first hot zone HZ1 has swiveled to. For example, the light distribution controlling device 8 controls the second light distribution variable lamp 6 so as to form the second light distribution pattern PV2 when the steering angle has increased further after the first hot zone HZ1 has reached the end of the first light distribution pattern PV1.

The second light distribution pattern PV2 formed in this case includes a second partial region R2 adjacent to the first light distribution pattern PV1 in the width direction of the vehicle and having an illuminance comparable to the illuminance of the first hot zone HZ1. The illuminance comparable to the illuminance of the first hot zone HZ1 is, for example, the illuminance the same as the illuminance of the first hot zone HZ1. Alternatively, this illuminance is an illuminance that, for example, allows a region having this illuminance to function as a hot zone in a combined light distribution pattern of the first light distribution pattern PV1 and the second light distribution pattern PV2 combined. Thus, the hot zone of the combined light distribution pattern moves from the region of the first light distribution pattern PV1 to the region of the second light distribution pattern PV2 while the steering angle increases.

As mentioned above, the second partial regions R2 are longer than the first light distribution pattern PV1 in the vertical direction. Therefore, when the hot zone of the combined light distribution pattern moves from the region of the first light distribution pattern PV1 to the region of the second light distribution pattern PV2, the size of the hot zone changes suddenly. This sudden change in the size of the hot zone may cause the driver to feel visually disturbed. The size of the hot zone also changes suddenly in a similar manner when the hot zone of the combined light distribution pattern moves back from the region of the second light distribution pattern PV2 to the region of the first light distribution pattern PV1 while the steering angle decreases, and this sudden change may cause the driver to feel visually disturbed.

In this respect, the light distribution controlling device 8 according to the present embodiment controls the first light distribution variable lamp 4 so as to expand the first hot zone HZ1 in the vertical direction as the first hot zone HZ1 approaches an end of the first light distribution pattern PV1, as shown in Figs. 7B and 7C. This configuration can keep the size of the hot zone from changing suddenly when the hot zone of the combined light distribution pattern moves across the region of the first light distribution pattern PV1 and the region of the second light distribution pattern PV2. Accordingly, the visibility for the driver can be improved.

Herein, the light distribution controlling device 8 may control the second light distribution variable lamp 6 so as to swivel the second light distribution pattern PV2 having an illuminance uniform thereacross, as in Embodiment 3 or 4, until the first hot zone HZ1 reaches an end of the first light distribution pattern PV1. Even this case may cause the driver to feel visually disturbed when the hot zone moves across the region of the first light distribution pattern PV1 and the region of the second light distribution pattern PV2. Therefore, it is effective to expand the first hot zone HZ1 in the vertical direction as the first hot zone HZ1 approaches an end of the first light distribution pattern PV1.

Thus far, some embodiments according to the present invention have been described in detail. The embodiments described above merely illustrate some specific examples for implementing the present invention.

### INDUSTRIAL APPLICABILITY

The present invention can be used in vehicle lamp systems, vehicle light distribution controlling devices, and vehicle light distribution controlling methods.

### REFERENCE SIGNS LIST

1 vehicle lamp system, 2 low beam lamp, 4 first light distribution variable lamp, 6 second light distribution variable lamp, 8 light distribution controlling device, CL cutoff line, HZ1 first hot zone, HZ2 second hot zone, PL low beam light distribution pattern, PV1 first light distribution pattern, PV2 second light distribution pattern, R1 first partial region, R2 second partial region

## Claims

1. A light distribution controlling device (8) configured to control formation of light distribution patterns by a first vehicle lamp (4) with variable light distribution and a second vehicle lamp (6) with variable light distribution the first vehicle lamp (4) forming, in a region ahead of a vehicle, a first light distribution pattern (PV1) having a first hot zone (HZ1), the second vehicle lamp (6) forming a second light distribution pattern (PV2) outside the first light distribution pattern (PV1) in a width direction of the vehicle, the light distribution controlling device (8) configured to:
control the first vehicle lamp (4) and the second vehicle lamp (6) so as to swivel the first hot zone (HZ1) within the first light distribution pattern (PV1) and to form the second light distribution pattern (PV2) outside the first light distribution pattern (PV1) where the first hot zone (HZ1) swivels to, and the light distribution controlling device (8) **further characterized in that** it is configured
to swivel the second light distribution pattern (PV2) in a range between an outer left side and an outer right side of the first light distribution pattern (PV1), and
to control the second vehicle lamp (6) so as to swivel the second light distribution pattern (PV2) in tandem with the swiveling of the first hot zone (HZ1).

2. The light distribution controlling device (8) according to Claim 1, wherein
the second light distribution pattern (PV2) further includes a second hot zone (HZ2), and wherein
the light distribution controlling device (8) is configured to control the second vehicle lamp (6) so as to swivel the second hot zone (HZ2) with the second hot zone (HZ2) overlapping the first hot zone (HZ1) within a range of the first light distribution pattern (PV1) and to displace the second hot zone (HZ2) further outward after the first hot zone (HZ1) has reached an end of the first light distribution pattern (PV1).

3. The light distribution controlling device (8) according to any one of Claims 1 to 2, wherein
the light distribution controlling device (8) is configured to control the first vehicle lamp (4) so as to turn off the first hot zone (HZ1) that has reached an end of the first light distribution pattern (PV1).

4. The light distribution controlling device (8) according to any one of Claims 1 to 3, wherein
the first vehicle lamp (4) is capable of adjusting, independently of each other, illuminances of a plurality of first partial regions (R1) arrayed in a matrix,
the second vehicle lamp (6) is capable of adjusting, independently of each other, illuminances of a plurality of second partial regions (R2) that are arrayed in the width direction of the vehicle and that are longer in a vertical direction than the first light distribution pattern (PV1), and
the light distribution controlling device (8) is configured to control the first vehicle lamp (4) and the second vehicle lamp (6) so as to expand the first hot zone (HZ1) in the vertical direction as the first hot zone (HZ1) approaches an end of the first light distribution pattern (PV1) in the width direction and, with the first hot zone (HZ1) having reached the end, to form the second light distribution pattern (PV2) having a second partial region (R2) adjacent to the first light distribution pattern (PV1) in the width direction and having an illuminance comparable to an illuminance of the first hot zone (HZ1).

5. The light distribution controlling device (8) according to any one of Claims 2-4, wherein the vehicle further comprises
a low beam lamp (2) that forms a low beam light distribution pattern (PL) including a cutoff line (CL), wherein
the second light distribution pattern (PV2) includes a second hot zone (HZ2), and wherein
the light distribution controlling device (8) is configured to control the first light vehicle lamp (4) and the second vehicle lamp (6) so as to form the first hot zone (HZ1) and the second hot zone (HZ2) above the cutoff line (CL).

6. A vehicle lamp system (1), comprising:
a first vehicle lamp (4) with variable light distribution configured to form, in a region ahead of a vehicle, a first light distribution pattern (PV1) having a first hot zone (HZ1);
a second vehicle lamp (6) with variable light distribution configured to form a second light distribution pattern (PV2) outside the first light distribution pattern (PV1) in a width direction of the vehicle; and
a light distribution controlling device (8) configured to control formation of light distribution patterns by the first vehicle lamp (4) and the second vehicle lamp (6) according to any one or more of the Claims 1-5.

7. A light distribution controlling method of controlling formation of light distribution patterns by a first vehicle lamp (4) with variable light distribution and a second vehicle lamp (6) with variable light distribution the first vehicle lamp (4) forming, in a region ahead of a vehicle, a first light distribution pattern (PV1) having a first hot zone (HZ1), the second vehicle lamp (6) forming a second light distribution pattern (PV2) outside the first light distribution pattern (PV1) in a width direction of the vehicle, the light distribution controlling method comprising:
controlling the first vehicle lamp (4) and the second vehicle lamp (6) so as to swivel the first hot zone (HZ1) within the first light distribution pattern (PV1) and to form the second light distribution pattern (PV2) outside the first light distribution pattern (PV1) where the first hot zone (HZ1) swivels to, and
swiveling the second light distribution pattern (PV2) in a range between an outer left side and an outer right side of the first light distribution pattern (PV1), and
controlling the second vehicle lamp (6) so as to swivel the second light distribution pattern (PV2) in tandem with the swiveling of the first hot zone (HZ1).

## Patentansprüche

1. Lichtverteilungssteuerungsvorrichtung (8), die dazu konfiguriert ist, die Bildung von Lichtverteilungsmustern durch eine erste Fahrzeuglampe (4) mit variabler Lichtverteilung und eine zweite Fahrzeuglampe (6) mit variabler Lichtverteilung zu steuern, wobei die erste Fahrzeuglampe (4) in einer Region vor einem Fahrzeug ein erstes Lichtverteilungsmuster (PV1) mit einer ersten heißen Zone (HZ1) bildet, wobei die zweite Fahrzeuglampe (6) ein zweites Lichtverteilungsmuster (PV2) außerhalb des ersten Lichtverteilungsmusters (PV1) in einer Breitenrichtung des Fahrzeugs bildet, wobei die Lichtverteilungssteuerungsvorrichtung (8) zu Folgendem konfiguriert ist:
Steuern der ersten Fahrzeuglampe (4) und der zweiten Fahrzeuglampe (6), um die erste heiße Zone (HZ1) innerhalb des ersten Lichtverteilungsmusters (PV1) zu schwenken und das zweite Lichtverteilungsmuster (PV2) außerhalb des ersten Lichtverteilungsmusters (PV1) zu bilden, zu dem die erste heiße Zone (HZ1) hin schwenkt, und wobei die Lichtverteilungssteuerungsvorrichtung (8) **ferner dadurch gekennzeichnet ist, dass** sie konfiguriert ist zum
Schwenken des zweiten Lichtverteilungsmusters (PV2) in einem Bereich zwischen einer äußeren linken Seite und einer äußeren rechten Seite des ersten Lichtverteilungsmusters (PV1) und
Steuern der zweiten Fahrzeuglampe (6), um das zweite Lichtverteilungsmuster (PV2) zusammen mit dem Schwenken der ersten heißen Zone (HZ1) zu schwenken.

2. Lichtverteilungssteuerungsvorrichtung (8) nach Anspruch 1, wobei
das zweite Lichtverteilungsmuster (PV2) ferner eine zweite heiße Zone (HZ2) beinhaltet und wobei
die Lichtverteilungssteuerungsvorrichtung (8) dazu konfiguriert ist, die zweite Fahrzeuglampe (6) zu steuern, um die zweite heiße Zone (HZ2) zu schwenken, wobei die zweite heiße Zone (HZ2) die erste heiße Zone (HZ1) innerhalb eines Bereichs des ersten Lichtverteilungsmusters (PV1) überlappt, und die zweite heiße Zone (HZ2) weiter nach außen zu verschieben, nachdem die erste heiße Zone (HZ1) ein Ende des ersten Lichtverteilungsmusters (PV1) erreicht hat.

3. Lichtverteilungssteuerungsvorrichtung (8) nach einem der Ansprüche 1 bis 2, wobei die Lichtverteilungssteuerungsvorrichtung (8) dazu konfiguriert ist, die erste Fahrzeuglampe (4) zu steuern, um die erste heiße Zone (HZ1) auszuschalten, die ein Ende des ersten Lichtverteilungsmusters (PV1) erreicht hat.

4. Lichtverteilungssteuerungsvorrichtung (8) nach einem der Ansprüche 1 bis 3, wobei
die erste Fahrzeuglampe (4) in der Lage ist, unabhängig voneinander Beleuchtungsstärken einer Vielzahl von in einer Matrix angeordneten ersten Teilregionen (R1) einzustellen,
die zweite Fahrzeuglampe (6) in der Lage ist, unabhängig voneinander Beleuchtungsstärken einer Vielzahl von zweiten Teilregionenn (R2) einzustellen, die in der Breitenrichtung des Fahrzeugs angeordnet sind und in einer vertikalen Richtung länger als das erste Lichtverteilungsmuster (PV1) sind, und
die Lichtverteilungssteuerungsvorrichtung (8) dazu konfiguriert ist, die erste Fahrzeuglampe (4) und die zweite Fahrzeuglampe (6) zu steuern, um die erste heiße Zone (HZ1) in der vertikalen Richtung zu erweitern, wenn sich die erste heiße Zone (HZ1) einem Ende des ersten Lichtverteilungsmusters (PV1) in der Breitenrichtung nähert, und, wenn die erste heiße Zone (HZ1) das Ende erreicht hat, das zweite Lichtverteilungsmuster (PV2) zu bilden, das eine zweite Teilregion (R2) aufweist, die an das erste Lichtverteilungsmuster (PV1) in der Breitenrichtung angrenzt und eine Beleuchtungsstärke aufweist, die mit einer Beleuchtungsstärke der ersten heißen Zone (HZ1) vergleichbar ist.

5. Lichtverteilungssteuerungsvorrichtung (8) nach einem der Ansprüche 2-4, wobei das Fahrzeug ferner Folgendes umfasst,
eine Abblendlichtlampe (2), die ein Abblendlichtverteilungsmuster (PL) beinhaltend eine Trennlinie (CL) bildet, wobei
das zweite Lichtverteilungsmuster (PV2) eine zweite heiße Zone (HZ2) beinhaltet und wobei
die Lichtverteilungssteuerungsvorrichtung (8) dazu konfiguriert ist, die erste Lichtfahrzeuglampe (4) und die zweite Fahrzeuglampe (6) zu steuern, um die erste heiße Zone (HZ1) und die zweite heiße Zone (HZ2) über der Trennlinie (CL) zu bilden.

6. Fahrzeuglampensystem (1), umfassend:
eine erste Fahrzeuglampe (4) mit variabler Lichtverteilung, die dazu konfiguriert ist, in einer Region vor einem Fahrzeug ein erstes Lichtverteilungsmuster (PV1) mit einer ersten heißen Zone (HZ1) zu bilden;
eine zweite Fahrzeuglampe (6) mit variabler Lichtverteilung, die dazu konfiguriert ist, ein zweites Lichtverteilungsmuster (PV2) außerhalb des ersten Lichtverteilungsmusters (PV1) in einer Breitenrichtung des Fahrzeugs zu bilden; und
eine Lichtverteilungssteuerungsvorrichtung (8), die dazu konfiguriert ist, Bildung von Lichtverteilungsmustern durch die erste Fahrzeuglampe (4) und die zweite Fahrzeuglampe (6) nach einem oder mehreren der Ansprüche 1-5 zu steuern.

7. Lichtverteilungssteuerungsverfahren zum Steuern von Bildung von Lichtverteilungsmustern durch eine erste Fahrzeuglampe (4) mit variabler Lichtverteilung und eine zweite Fahrzeuglampe (6) mit variabler Lichtverteilung, wobei die erste Fahrzeuglampe (4) in einer Region vor einem Fahrzeug ein erstes Lichtverteilungsmuster (PV1) mit einer ersten heißen Zone (HZ1) bildet, wobei die zweite Fahrzeuglampe (6) ein zweites Lichtverteilungsmuster (PV2) außerhalb des ersten Lichtverteilungsmusters (PV1) in einer Breitenrichtung des Fahrzeugs bildet, wobei das Lichtverteilungssteuerungsverfahren Folgendes umfasst:
Steuern der ersten Fahrzeuglampe (4) und der zweiten Fahrzeuglampe (6), um die erste heiße Zone (HZ1) innerhalb des ersten Lichtverteilungsmusters (PV1) zu schwenken und das zweite Lichtverteilungsmuster (PV2) außerhalb des ersten Lichtverteilungsmusters (PV1) zu bilden, zu dem die erste heiße Zone (HZ1) hin schwenkt, und
Schwenken des zweiten Lichtverteilungsmusters (PV2) in einem Bereich zwischen einer äußeren linken Seite und einer äußeren rechten Seite des ersten Lichtverteilungsmusters (PV1) und
Steuern der zweiten Fahrzeuglampe (6), um das zweite Lichtverteilungsmuster (PV2) zusammen mit dem Schwenken der ersten heißen Zone (HZ1) zu schwenken.

## Revendications

1. Dispositif de commande de distribution de lumière (8) conçu pour commander la formation de motifs de distribution de lumière par un premier phare (4) de véhicule à distribution de lumière variable et un second phare (6) de véhicule à distribution de lumière variable, le premier phare (4) de véhicule formant, dans une zone en avant d'un véhicule, un premier motif de distribution de lumière (PV1) possédant une première zone chaude (HZ1), le second phare (6) de véhicule formant un second motif de distribution de lumière (PV2) à l'extérieur du premier motif de distribution de lumière (PV1) dans une direction de largeur du véhicule, le dispositif de commande de distribution de lumière (8) conçu pour : commander le premier phare (4) de véhicule et le second phare (6) de véhicule de façon à faire pivoter la première zone chaude (HZ1) à l'intérieur du premier motif de distribution de lumière (PV1) et à former le second motif de distribution de lumière (PV2) à l'extérieur du premier motif de distribution de lumière (PV1) sur lequel la première zone chaude (HZ1) pivote, et le dispositif de commande de distribution de lumière (8) **caractérisé en outre en ce qu'**il est conçu pour faire pivoter le second motif de distribution de lumière (PV2) dans une plage entre un côté gauche externe et un côté droit externe du premier motif de distribution de lumière (PV1), et pour commander le second phare (6) de véhicule de façon à faire pivoter le second motif de distribution de lumière (PV2) en tandem avec le pivotement de la première zone chaude (HZ1).

2. Dispositif de commande de distribution de lumière (8) selon la revendication 1, ledit second motif de distribution de lumière (PV2) comprenant en outre une seconde zone chaude (HZ2), et ledit dispositif de commande de distribution de lumière (8) étant conçu pour commander le second phare (6) de véhicule de façon à faire pivoter la seconde zone chaude (HZ2), ladite seconde zone chaude (HZ2) chevauchant la première zone chaude (HZ1) à l'intérieur d'une plage du premier motif de distribution de lumière (PV1) et pour déplacer la seconde zone chaude (HZ2) davantage vers l'extérieur après que la première zone chaude (HZ1) a atteint une extrémité du premier motif de distribution de lumière (PV1).

3. Dispositif de commande de distribution de lumière (8) selon l'une quelconque des revendications 1 à 2, ledit dispositif de commande de distribution de lumière (8) étant conçu pour commander le premier phare (4) de véhicule de façon à éteindre la première zone chaude (HZ1) qui a atteint une extrémité du premier motif de distribution de lumière (PV1).

4. Dispositif de commande de distribution de lumière (8) selon l'une quelconque des revendications 1 à 3, ledit premier phare (4) de véhicule étant capable de régler, indépendamment les uns des autres, des éclairages d'une pluralité de premières zones partielles (R1) disposées en réseau dans une matrice, ledit second phare (6) de véhicule étant capable de régler, indépendamment les uns des autres, des éclairages d'une pluralité de secondes zones partielles (R2) qui sont disposées en réseau dans la direction de largeur du véhicule et qui sont plus longues dans une direction verticale que le premier motif de distribution de lumière (PV1), et ledit dispositif de commande de distribution de lumière (8) étant conçu pour commander le premier phare (4) de véhicule et le second phare (6) de véhicule de façon à étendre la première zone chaude (HZ1) dans la direction verticale tandis que la première zone chaude (HZ1) s'approche d'une extrémité du premier motif de distribution de lumière (PV1) dans la direction de largeur et, ladite première zone chaude (HZ1) atteignant l'extrémité, pour former le second motif de distribution de lumière (PV2) possédant une seconde zone partielle (R2) adjacente au premier motif de distribution de lumière (PV1) dans la direction de largeur et possédant un éclairement comparable à un éclairement de la première zone chaude (HZ1).

5. Dispositif de commande de distribution de lumière (8) selon l'une quelconque des revendications 2 à 4, ledit véhicule comprenant en outre un phare (2) de faisceau de croisement qui forme un motif de distribution de lumière (PL) de faisceau de croisement comprenant une ligne de coupure (CL),
ledit second motif de distribution de lumière (PV2) comprenant une seconde zone chaude (HZ2), et
ledit dispositif de commande de distribution de lumière (8) étant conçu pour commander le premier phare (4) de véhicule de lumière et le second phare (6) de véhicule de façon à former la première zone chaude (HZ1) et la seconde zone chaude (HZ2) au-dessus de la ligne de coupure (CL).

6. Système de phare (1) de véhicule, comprenant :
un premier phare (4) de véhicule à distribution de lumière variable conçu pour former, dans une zone en avant d'un véhicule, un premier motif de distribution de lumière (PV1) possédant une première zone chaude (HZ1) ;
un second phare (6) de véhicule à distribution de lumière variable conçu pour former un second motif de distribution de lumière (PV2) à l'extérieur du premier motif de distribution de lumière (PV1) dans une direction de largeur du véhicule ; et
un dispositif de commande de distribution de lumière (8) conçu pour commander la formation de motifs de distribution de lumière par le premier phare (4) de véhicule et le second phare (6) de véhicule selon l'une quelconque ou plusieurs des revendications 1 à 5.

7. Procédé de commande de distribution de lumière pour commander la formation de motifs de distribution de lumière par un premier phare (4) de véhicule à distribution de lumière variable et un second phare (6) de véhicule à distribution de lumière variable, le premier phare (4) de véhicule formant, dans une zone en avant d'un véhicule, un premier motif de distribution de lumière (PV1) possédant une première zone chaude (HZ 1), le second phare (6) de véhicule formant un second motif de distribution de lumière (PV2) à l'extérieur du premier motif de distribution de lumière (PV1) dans une direction de largeur du véhicule, le procédé de commande de distribution de lumière comprenant :
la commande du premier phare (4) de véhicule et du second phare (6) de véhicule de façon à faire pivoter la première zone chaude (HZ1) à l'intérieur du premier motif de distribution de lumière (PV1) et à former le second motif de distribution de lumière (PV2) à l'extérieur du premier motif de distribution de lumière (PV1) vers lequel la première zone chaude (HZ1) pivote, et
le pivotement du second motif de distribution de lumière (PV2) dans une plage entre un côté gauche externe et un côté droit externe du premier motif de distribution de lumière (PV1), et la commande du second phare (6) de véhicule de façon à faire pivoter le second motif de distribution de lumière (PV2) en tandem avec le pivotement de la première zone chaude (HZ1).
